# EUROPÄISCHE PATENTSCHRIFT

(11) **EP 1 762 775 B1**
(45) Veröffentlichungstag und Bekanntmachung des Hinweises auf die Patenterteilung: **28.05.2008**
(21) Anmeldenummer: 06018075.9
(22) Anmeldetag: 30.08.2006
(51) Int. Cl.: F21S 8/10

(54) **Beleuchtungseinrichtung**
Lighting device
Dispositif d'éclairage

(30) Priorität: 07.09.2005 DE 102005042358
(43) Veröffentlichungstag der Anmeldung: 14.03.2007
(73) Patentinhaber: AUDI AG, 85045 Ingolstadt (DE)
(72) Erfinder: Georgi, André, 85716 Unterschleissheim (DE); Sola Gomfaus, Andreu, 85049 Ingolstadt (DE)
(74) Vertreter: Thielmann, Frank

(56) Entgegenhaltungen:
- EP-A2- 1 471 304
- DE-A1- 10 105 303
- DE-B- 1 095 690
- FR-A- 2 853 717
- US-A- 5 642 933
- US-A1- 2004 085 766
- US-B1- 6 183 100

## Beschreibung

Die Erfindung betrifft eine Beleuchtungseinrichtung, insbesondere einen Schweinwerfer, für ein Kraftfahrzeug.

Herkömmliche Scheinwerfer zeichnen sich dadurch aus, dass sie halbschalenförmige Reflektoren umfassen, in denen eine oder mehrere Bohrungen für die entsprechenden Leuchtmittel vorgesehen sind. Damit bleibt ein sehr großer Leerraum innerhalb der Halbschale ungenutzt. Auch bei neu entwickelten Scheinwerfern, deren Ausleuchtbereich anpassbar ist, werden häufig eine Vielzahl von Leuchtmitteln in einer Ebene an einem Träger angebracht. So offenbart beispielsweise die DE 100 09 782 A1 eine Beleuchtungseinrichtung für Fahrzeuge, bei der eine Vielzahl von in einer Matrix verteilt angeordneten Halbleiterlichtquellen vorgesehen sind. Auch davor ist eine große Menge Bauraums auf dem Lichtweg ungenutzt.

Die EP 1 471 304 offenbart einen Fahrzeugscheinwerfer bestehend aus einem Reflektor und eines sich vom Scheitelpunkt des Reflektors in Richtung der Ausbreitungsrichtung des Lichts erstreckenden Zylinders. Auf dem Zylinder sind die Lichtquellen hintereinander bezüglich der Ausbreitungsrichtung des Lichts angeordnet.

Ein weiterer Nachteil einer solchen Anordnung ist, dass eine gezielte Kühlung bestimmter Leuchtmittel nur schwer realisierbar ist, da die Leuchtmittel - teilweise dicht gedrängt - am hinteren Ende des für den Scheinwerfer vorgesehenen Bauraums angeordnet sind.

Der vorliegenden Erfindung liegt daher die Aufgabe zugrunde, eine Beleuchtungseinrichtung zu schaffen, die eine bessere Raumausnutzung ermöglicht, und bessere Kühleigenschaften aufweist.

Zur Lösung dieser Aufgabe ist erfindungsgemäß eine Beleuchtungseinrichtung, insbesondere ein Scheinwerfer, für ein Kraftfahrzeug vorgesehen, umfassend einen länglichen Grundkörper, an dem wenigstens zwei in axialer Richtung hintereinander und voneinander beabstandet angeordnete, den Grundkörper umschließende Reflektoren befestigt sind, denen jeweils wenigstens ein Leichtmittel zugeordnet ist, welche Reflektoren zur Bestimmung des Ausleuchtbereichs der Beleuchtungseinrichtung ausgebildet sind.

Damit weicht die erfindungsgemäße Beleuchtungseinrichtung von der bisher üblichen, annähernd zweidimensionalen Bauweise ab und nützt auch die dritte Dimension, indem eine axiale Bauweise verwendet wird. Damit ist ein kompakter Aufbau bei optimaler Raumausnutzung gegeben. Zusätzlich wird durch die Verwendung mehrerer, hintereinander angeordneter Reflektoren ein Luftzirkulationsraum vor und zwischen den Reflektoren geschaffen, der der besseren Kühlung der Leuchtmittel dient. Durch spezielle Ausgestaltung und spezielle Ausrichtung der Reflektoren wird der Ausleuchtbereich der Beleuchtungseinrichtung bestimmt. Grundsätzlich ist auch eine modulare Bauweise denkbar, in der einzelne Ebenen, umfassend ein Reflektor und die Leuchtmittel, hinzugefügt oder entfernt werden können. Für die Produktion verschieden heller oder verschieden ausgerichteter Beleuchtungseinrichtungen kann sich dies als nützlich erweisen.

In Ausgestaltung der Erfindung kann der Grundkörper im Wesentlichen zylindrisch oder auch im Wesentlichen kegelförmig oder kegelstumpfförmig ausgebildet sein, wobei die Spitze des Kegels in Lichtaustrittsrichtung liegt. Eine solche runde Ausformung ist nicht nur optisch ansprechender, sondern ermöglicht es auch, auf einfache Weise ohne Schattenwürfe oder Beachtung komplizierterer Symmetrien den Ausleuchtbereich zu gestalten. Die Anordnung ist somit rotationssymmetrisch.

Die Leuchtmittel können dabei am Grundkörper angeordnet sein. Die Stromzuführung ist damit auch durch den Grundkörper möglich.

In vorteilhafter Ausgestaltung kann ein in Lichtaustrittsrichtung weiter vorne befindlicher Reflektor eine kleinere radiale Ausdehnung haben als ein in Lichtaustrittsrichtung weiter hinten befindlicher Reflektor. Die Beleuchtungseinrichtung kann also sozusagen durch einen Kegel eingeschlossen werden. Damit ist sichergestellt, dass auch das Licht der hinteren Reflektoren an den vorderen Reflektoren vorbei aus der Beleuchtungseinrichtung austreten kann.

Mit besonderem Vorteil ist zumindest ein Reflektor mehrfach radial geschlitzt, so dass er aus mehreren Lamellen besteht. Damit ist eine noch bessere Luftzirkulation und somit eine bessere Kühlung der Leuchtmittel möglich. Die Schlitzung erfolgt dabei vorzugsweise so, dass gleich große, symmetrisch angeordnete Lamellen entstehen. Dabei kann jeder Lamelle ein eigenes Leuchtmittel zugeordnet werden. Alternativ ist es jedoch auch möglich, dass einer Lamelle mehrere Leuchtmittel zugeordnet sind.

Bei geschlitzter Ausführung zweier hintereinander angeordneter Reflektoren können hintereinander angeordnete Lamellen versetzt zueinander oder fluchtend angeordnet sein. Die versetzte Anordnung der Lamellen ermöglicht bei nicht lichtdurchlässigen Reflektoren eine größere Lichtausbeute.

Mit besonderem Vorteil können die Lamellen schwenkbar gelagert sein. Bei dieser Ausführungsform ist es also möglich, die einzelnen reflektierenden Lamellen in verschiedenen Positionen zu verstellen. Dadurch wird der Ausleuchtbereich der Beleuchtungseinrichtung verändert. Diese Ausführung eignet sich insbesondere für multifunktionale Scheinwerfer, die mit mehreren verschiedenen Ausleuchtbereichen arbeiten. Dabei sind dann beispielsweise ein Stadtlicht, ein Autobahnlicht, ein Kurvenlicht usw. vorgesehen. Über eine geeignete Ansteuerung der Lamellen können diese verschiedenen Lichtverteilungen mit der erfindungsgemäßen Beleuchtungseinrichtung erzeugt werden. Die Lamellen können dabei auch soweit schwenkbar sein, dass sie das ihnen zugeordnete Leuchtmittel vollkommen abdecken. So können beispielsweise ganze Reflektorlagen bei Bedarf abgedunkelt werden.

Die Schwenkbarkeit der Lamellen und ihre momentane Stellung kann dabei nicht nur von der momentanen Fahrzeugumgebung oder der Ausleuchtungsverhältnissen in der selben abhängig gemacht werden. Die Verschwenkung der Lamellen kann auch von weiteren Parametern abhängen, die den momentanen Fahrzustand angeben. So kann beispielsweise eine bremskraftabhängige Verstellung oder eine beladungsabhängige Verstellung vorgesehen sein.

In einer ersten Alternative können alle Lamellen miteinander bewegungsgekoppelt sein, so dass sie gemeinsam schwenkbar sind. Dabei ist vorteilhafterweise nur ein Steuerelement zur Schwenkung der Lamellen erforderlich.

In einer zweiten Alternative können jeweils die Lamellen einer Radialebene und/oder axial hintereinander angeordnete Lamellen bewegungsgekoppelt sein, so dass sie gemeinsam schwenkbar sind. Auch hier ist die Zahl der für die Schwenkbarkeit notwendigen Mittel reduziert, gegenüber der ersten Alternative ist jedoch ein größerer Freiraum in der Festlegung des Ausleuchtbereiches gegeben.

In einer dritten Alternative sind alle Lamellen separat schwenkbar. Damit ist eine perfekte Anpassung des Ausleuchtbereiches möglich, so dass die Beleuchtungseinrichtung dann besonders geeignet für neue Beleuchtungsanlagen sind, die den Ausleuchtbereich der Scheinwerfer auf die momentane Fahrsituation anpassen.

Die Schwenkbarkeit der Lamellen kann dabei über Zugmittel, insbesondere in einem Hohlraum des Grundkörpers verlaufende Zugseile, realisiert sein. Ebenso denkbar sind beispielsweise Zugstangen. Die Zugstangen oder Zugseile werden dann über eine hinter der Beleuchtungseinrichtung angeordnete Steuer- und Antriebseinheit einzeln oder gemeinsam betätigt.

Mit besonderem Vorteil können die Leuchtmittel mit den ihnen zugeordneten Lamellen schwenkbar sein. Durch die Mitbewegung der Leuchtmittel ist eine feste optische Beziehung zwischen den reflektierenden Lamellen und der eigentlichen Lichtquelle gegeben, so dass hier keinerlei Umrechnung erfolgen muss. Die Lichtverteilung des Gesamtobjekts, bestehend aus dem Leuchtmittel und der Lamelle, ist also immer dieselbe, nur die Ausstrahlungsrichtung verändert sich beim Schwenken der Lamelle.

Allgemein können zweckmäßigerweise die Reflektoren halbdurchlässig sein. Auf der dem zugeordneten Leuchtmittel zugewandten Seite sind sie reflektierend ausgebildet, so dass dessen Licht in die Austrittsrichtung reflektiert wird. Gleichzeitig kann jedoch das Licht der Leuchtmittel, die weiter hinten angeordnet sind, und das ebenso über die ihnen zugeordneten Reflektoren gespiegelt wird, ebenso weiter nach vorne in Lichtaustrittsrichtung vordringen. Damit wird eine größtmögliche Lichtausbeute erzielt. Alternativerweise können die Reflektoren auch so ausgebildet sein, dass das Licht an weiter vorne befindlichen Reflektoren vorbeigeleitet wird.

Zur weiteren Kühlung der Beleuchtungseinrichtung kann der Grundkörper einen massiven Kühlkörper umfassen. Wenn die Leuchtmittel selber am Grundkörper angeordnet sind, kann die Wärme somit in den Kühlkörper abgeführt werden. Alternativ hierzu ist es auch möglich, dass der Grundkörper Wärmeableitungen, insbesondere aus Kupfer, umfasst. Zusammen mit der besseren Durchlüftung ist somit immer eine angemessene Temperatur der Beleuchtungseinrichtung erreichbar.

In weiterer Ausgestaltung der Erfindung kann in Verlängerung des Grundkörpers in Lichtaustrittsrichtung ein weiteres optisches Element, insbesondere eine Linse, vorgesehen sein. Dieses weitere optische Element dient zum einen dazu, die Beleuchtungseinrichtung in Lichtaustrittsrichtung abzuschließen, zum anderen kann hierdurch ein spezieller Hotspot festgelegt werden. Diesem weiteren optischen Element kann vorzugsweise ein weiteres Leuchtmittel zugeordnet sein. Dieses Leuchtmittel kann beispielsweise auf dem dem optischen Element zugeordneten Ende des länglichen Grundkörpers angeordnet sein.

Als Leuchtmittel sind insbesondere LEDs geeignet. Diese weisen eine längere Lebensdauer auf und erzeugen insgesamt weniger Wärme. Dadurch können sie auch näher an eine abdeckende Scheibe beziehungsweise das weitere optische Element herangebracht werden.

Weiter Vorteile und Einzelheiten der Erfindung ergeben sich aus den im folgenden beschriebenen Ausführungsbeispielen sowie anhand de Zeichnungen. Dabei zeigen:
- Fig. 1: einen Querschnitt durch eine erfindungsgemäße Beleuchtungseinrichtung nach einem ersten Ausführungsbeispiel;
- Fig. 2: eine perspektivische Ansicht einer erfindungsgemäßen Beleuchtungseinrichtung nach einem zweiten Ausführungsbeispiel;
- Fig. 3: eine Prinzipskizze der Realisierung der Verschwenkbarkeit axial fluchtend hintereinander angeordneter Lamellen für das zweite Ausführungsbeispiel und
- Fig. 4: eine Prinzipskizze der Realisierung der gemeinsamen Verschwenkbarkeit der Lamellen einer radialen Ebene für das zweite Ausführungsbeispiel.

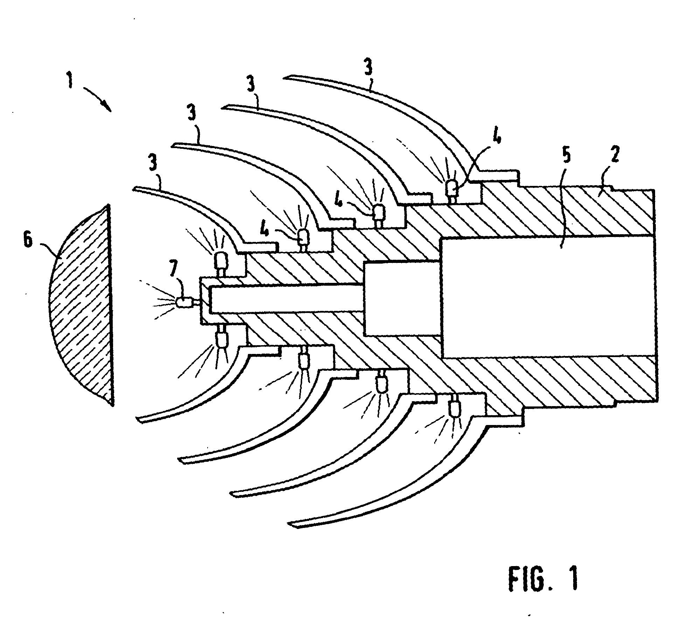

Fig. 1 zeigt einen Querschnitt durch eine Beleuchtungseinrichtung 1. Sie umfasst einen länglichen Grundkörper 2, der aus mehreren zylindrischen Abschnitten besteht, deren jeweiliger Radius in Lichtaustrittsrichtung stufenweise kleiner wird. An jeder dieser Stufen ist ein den Grundkörper 2 umschließender Reflektor 3 angeordnet. Den Reflektoren 3 sind jeweils LEDs 4 zugeordnet. Diese sind auf den Stufen des Grundkörpers 2 befestigt und werden durch den Grundkörper 2 mit elektrischem Strom versorgt, wobei jede der LEDs 4 separat bestrombar ist. Durch Zahl und Ort der leuchtenden LEDs 4 bestimmt sich auf variable Weise der Ausleuchtbereich. Dabei sind auf jeder Stufe vier LEDs 4 vorgesehen, von denen hier aufgrund der Darstellung im Querschnitt nur zwei zu sehen sind. Das Licht der LEDs 4 wird durch die Reflektoren 3 in Lichtaustrittsrichtung umgelenkt. Die Reflektoren 3 sind halbdurchlässig ausgebildet, so dass das Licht der weiter hinten angeordneten Leuchtmittel sie in Lichtaustrittsrichtung durchdrängen kann. Die Reflektoren 3 können an mehreren Stellen radial geschlitzt sein, so dass einzelne Lamellen gebildet werden. Durch diese Schlitzungen kann eine Luftzirkulation erreicht werden, die für eine Kühlung der Leuchtmittel 4 sorgt. Im Inneren des Grundkörpers 2 ist ein massiver Kühlkörper 5 angeordnet, der ebenso Wärme der LEDs 4 aufnehmen kann. Die Austrittsöffnung der Beleuchtungseinrichtung 1 wird durch eine Linse 6 verschlossen. Diese bestimmt zusammen mit den Reflektoren 3 den Ausleuchtbereich der Beleuchtungseinrichtung 1, der durch die separate Schaltbarkeit der LEDs 4 noch angepasst werden kann. Der Linse 6 ist eine weitere LED 7 zugeordnet. Diese kann beispielsweise einen besonderen Hotspot ausleuchten.

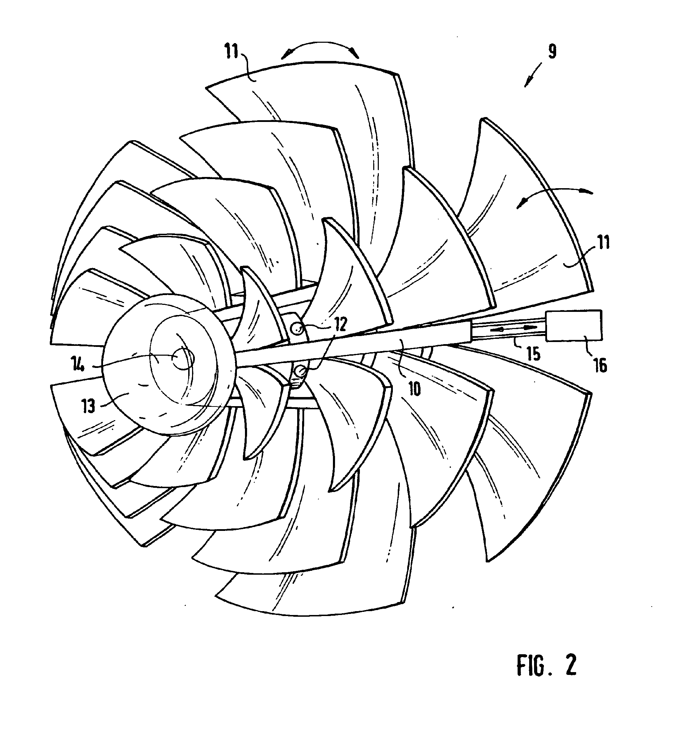

Fig. 2 zeigt eine perspektivische Ansicht einer Beleuchtungseinrichtung 9 gemäß einem zweiten Ausführungsbeispiel. Sie weist einen im Wesentlichen kegelstumpfförmigen Grundkörper 10 auf. Weiterhin sind vier hintereinander angeordnete Reflektoren vorgesehen, die jeweils aus sechs Lamellen 11 bestehen. Jede dieser Lamellen 11 ist schwenkbar gelagert. Den Lamellen 11 ist jeweils eine LED 12 zugeordnet. Diese sind so angebracht, dass sie gemeinsam mit den Lamellen 11 schwenkbar sind. Die Lichtaustrittsöffnung wird durch eine Linse 13 verschlossen, der eine weitere LED 14 zugeordnet ist. Der Ausleuchtbereich der Beleuchtungseinrichtung 9 wird durch die Stellung der Lamellen 11 und die Linse 13 bestimmt. Die zusätzliche LED 14 kann beispielsweise der Ausleuchtung eines besonderen Hotspots dienen. Die Lamellen 11, die hintereinander angeordnet sind, sind fluchtend angeordnet und wiederum halbdurchlässig, so dass sie das Licht der ihnen zugeordneten LED 12 in Lichtaustrittsrichtung reflektieren, das Licht weiter hinten gelegener Ebenen jedoch durchlassen. Die Schwenkstellung der Lamellen 11 kann über bei 15 angedeutete Zugseile verändert werden. Dabei sind hier alle Lamellen 11 einzeln verstellbar, so dass der Ausleuchtbereich der Beleuchtungseinrichtung beliebig angepasst werden kann. Dafür kann beispielsweise eine Antriebs- und Steuereinheit 16 vorgesehen sein. Die Antriebs- und Steuereinheit 16 erhält ihre Daten von einem System zur Steuerung der Beleuchtung. Darin werden verschiedenste Parameter berücksichtigt, aus denen eine bestimmte Stellung der Lamellen 11 berechnet wird. Im einfachsten Falle sind zwei verschiedene Schwenkstellungen der Lamellen 11 vorgesehen, beispielsweise für Fernlicht und Abblendlicht. Im Rahmen eines adaptiven Frontlichtsystems kann eine Mehrzahl von Stellungen für verschiedene Fahrzeugumgebungen vorgesehen sein. Es ist auch denkbar, dass die Schwenkstellung der Lamellen 11 von aktuellen Fahrbedingungen bestimmt wird. Dabei können beispielsweise solche Parameter wie Bremskraft oder Beladung eingehen.

Zur Kühlung des Scheinwerfers sind zunächst nicht dargestellte Mittel zur Luftzirkulation innerhalb der Beleuchtungseinrichtung 9 vorgesehen. Durch die Schlitzungen zwischen den Lamellen 11 ist eine gute Durchlüftung gegeben. Als weiteres Kühlungsmittel sind Wärmeleiter aus Kupfer vorgesehen, die innerhalb des Grundkörpers 10 verlaufen und Wärme, die durch die LEDs 12 entsteht, abführen können.

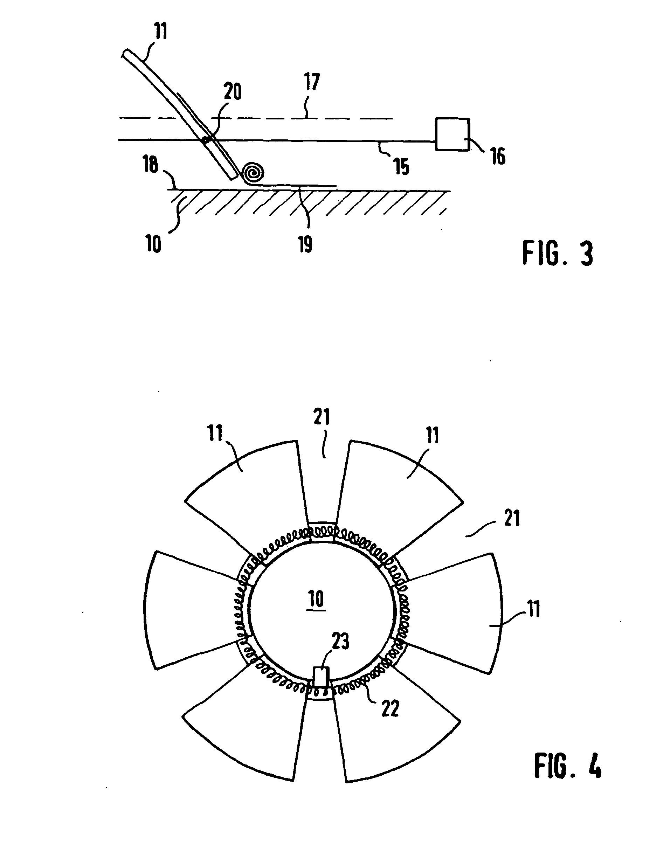

Fig.3 zeigt eine Prinzipskizze, die eine Realisierung der Schwenkbarkeit der Lamellen 11 über ein Zugseil 15 darstellt. Die verschwenkbaren Lamellen 11 sind, wie schon aus Fig. 2 zu entnehmen, in Einsenkungen des Grundkörpers 10 gelagert. Im Bereich der Einsenkung hat der Grundkörper 10 einen inneren Radius 18 und einen äußeren Radius 17. Die Lamellen 11 sind in den Einsenkungen über Dreh- oder Schenkelfedern 19 gehalten. Das Zugseil 15 ist am Punkt 20 an der Lamelle 11 befestigt und verläuft in axialer Richtung weiter, da alle axial fluchtend hintereinander angeordneten Lamellen 11 über ein einziges Zugseil 15 geschwenkt werden. Es ist natürlich genauso gut möglich, für jede Lamelle 11 ein Zugseil 15 vorzusehen, so dass die Lamellen einzeln verstellt werden können. Das Zugseil 15 ist mit der Antriebsbeziehungsweise Steuereinheit 16 verbunden, über die eine antreibende Kraft erzeugt wird, die das Zugseil bewegt und somit die Lamelle 11 gegen die Rückstellkraft der Dreh- oder Schenkelfeder 19 verschwenkt. Alternativ könnte auch statt dem Zugseil 15 ein Draht aus einer Formgedächtnis-Legierung, ein so genannter SMA-Draht (SMA = shape memory alloy), verwendet werden, der sich bei Stromdurchfluss erwärmt und dabei seine Länge verändert. Die Antriebs- beziehungsweise Steuereinheit 16 würde dem SMA-Draht dann mit Strom beaufschlagen.

Fig. 4 zeigt in einer Prinzipskizze, wie eine gleichzeitige Verschwenkung der Lamellen 11 eines Reflektors erreicht werden kann. Wie schon aus Fig. 2 bekannt, ist der Reflektor einer Ebene durch Schlitzungen 21 in sechs Lamellen 11 unterteilt. Diese sind am Grundkörper 10 angelenkt und an einer flexiblen Drehwelle 22 befestigt. Diese Drehwelle kann durch einen Motor 23 gleichmäßig verdreht werden, worauf die Lamellen 11 verschwenkt werden. Dabei sind schon kleine Drehstrecken des Motors 23 ausreichend.

Zur Realisierung der Verschwenkbarkeit der Lamellen 11 sind auch weitere Schwenkmittel denkbar. So können Bimetallaktuatoren oder elektromagnetische Aktuatoren vorgesehen sein.

## Patentansprüche

1. Beleuchtungseinrichtung, insbesondere Scheinwerfer, für ein Kraftfahrzeug, umfassend einen länglichen Grundkörper, an dem ein den Grundkörper umschließender Reflektor befestigt ist, dem wenigstens ein Leuchtmittel zugeordnet ist, welcher Reflektor zur Bestimmung des Ausleuchtbereichs der Beleuchtungseinrichtung ausgebildet ist,
**dadurch gekennzeichnet,**
**dass** an dem Grundkörper (2, 10) wenigstens zwei in axialer Richtung hintereinander und voneinander beabstandet angeordnete und am Grundkörper befestigte, den Grundkörper (2, 10) umschließende Reflektoren (3), denen jeweils wenigstens ein Leuchtmittel zugeordnet ist, angeordnet sind, die zur Bestimmung des Ausleuchtbereichs dienen, wobei zumindest ein Reflektor (3) mehrfach radial geschlitzt ist, so dass er aus mehreren Lamellen (11) besteht.

2. Beleuchtungseinrichtung nach Anspruch 1,
**dadurch gekennzeichnet,**
**dass** der Grundkörper (2, 10) im Wesentlichen zylindrisch ist.

3. Beleuchtungseinrichtung nach Anspruch 1,
**dadurch gekennzeichnet,**
**dass** der Grundkörper (2, 10) im Wesentlichen kegelförmig oder kegelstumpfförmig ist, wobei die Spitze des Kegels in Lichtaustrittsrichtung liegt.

4. Beleuchtungseinrichtung nach einem der vorangehenden Ansprüche,
**dadurch gekennzeichnet,**
**dass** die Leuchtmittel am Grundkörper (2, 10) angeordnet sind.

5. Beleuchtungseinrichtung nach einem der vorangehenden Ansprüche,
**dadurch gekennzeichnet,**
**dass** ein in Lichtaustrittsrichtung weiter vorne befindlicher Reflektor (3) eine kleinere radiale Ausdehnung hat als ein in Lichtaustrittsrichtung weiter hinten befindlicher Reflektor (3).

6. Beleuchtungseinrichtung nach einem der vorangehenden Ansprüche,
**dadurch gekennzeichnet,**
**dass** bei geschlitzter Ausführung zweier hintereinander angeordneter Reflektoren (3) hintereinander angeordnete Lamellen (11) versetzt zueinander oder fluchtend angeordnet sind.

7. Beleuchtungseinrichtung nach einem der vorangehenden Ansprüche,
**dadurch gekennzeichnet,**
**dass** die Lamellen (11) schwenkbar gelagert sind.

8. Beleuchtungseinrichtung nach Anspruch 7, **dadurch gekennzeichnet, dass** alle Lamellen (11) bewegungsgekoppelt sind, so dass sie gemeinsam schwenkbar sind.

9. Beleuchtungseinrichtung nach Anspruch 7,
**dadurch gekennzeichnet,**
**dass** jeweils die Lamellen (11) einer Radialebene und/oder axial hintereinander angeordnete Lamellen (11) bewegungsgekoppelt sind, so dass sie gemeinsam schwenkbar sind.

10. Beleuchtungseinrichtung nach Anspruch 7,
**dadurch gekennzeichnet,**
**dass** alle Lamellen (11) separat schwenkbar sind.

11. Beleuchtungseinrichtung nach einem der Ansprüche 7 bis 10,
**dadurch gekennzeichnet,**
**dass** die Schwenkbarkeit der Lamellen (11) über Zugmittel, insbesondere in einem Hohlraum des Grundkörpers (10) verlaufende Zugseile (15), realisiert ist.

12. Beleuchtungseinrichtung nach einem der Ansprüche 7 bis 11,
**dadurch gekennzeichnet,**
**dass** die Leuchtmittel mit den ihnen zugeordneten Lamellen (11) schwenkbar sind.

13. Beleuchtungseinrichtung nach einem der vorangehenden Ansprüche,
**dadurch gekennzeichnet,**
**dass** die Reflektoren (3) halbdurchlässig sind.

14. Beleuchtungseinrichtung nach einem der vorangehenden Ansprüche, **dadurch gekennzeichnet, dass** der Grundkörper (2, 10) einen massiven Kühlkörper umfasst.

15. Beleuchtungseinrichtung nach einem der Ansprüche 1 bis 13,
**dadurch gekennzeichnet,**
**dass** der Grundkörper (2, 10) Hitzeableitungen, insbesondere aus Kupfer, umfasst.

16. Beleuchtungseinrichtung nach einem der vorangehenden Ansprüche,
**dadurch gekennzeichnet,**
**dass** in Verlängerung des Grundkörpers (2, 10) in Lichtaustrittsrichtung ein weiteres optisches Element, insbesondere eine Linse (6, 13), vorgesehen ist.

17. Beleuchtungseinrichtung nach Anspruch 16,
**dadurch gekennzeichnet,**
**dass** dem Element ein weiteres Leuchtmittel zugeordnet ist.

18. Beleuchtungseinrichtung nach einem der vorangehenden Ansprüche,
**dadurch gekennzeichnet,**
**dass** die Leuchtmittel LEDs (4, 12) sind.

## Claims

1. Lighting device, particularly a headlight, for a vehicle, comprising an oblong base to which a reflector that surrounds the base is attached, the said reflector having at least one lighting means attached to it and being formed to determine the area of illumination of the lighting device,
that has at least two reflectors (3), which surround the base (2, 10) and which are attached to the base and disposed separated from each other in an axial direction, one behind the other, the said reflectors (3) each having at least one lighting means attached to them and serving to define the lighting area, whereby at least one reflector (3) has several radial splits such that it comprises several laminas (11).

2. Lighting device in accordance with claim 1,
**characterized in that**
the base (2, 10) is essentially cylindrical.

3. Lighting device in accordance with claim 1,
**characterized in that**
the base (2, 10) is essentially conical, or in the form of a truncated cone, whereby the tip of the cone lies in the direction in which the light is radiated.

4. Lighting device in accordance with one of the preceding claims,
**characterized in that**
the lighting means are disposed on the base (2, 10).

5. Lighting means in accordance with one of the preceding claims,
**characterized in that**
a reflector (3), which is placed further forwards in the direction from which the light is radiated, extends less radially than does a reflector located further back in the direction in which the light is radiated.

6. Lighting device in accordance with one of the preceding claims,
**characterized in that**
in the split design of two reflectors (3) disposed on behind another, lamellas (11) disposed one behind another are arranged either displaced or aligned in relation to each other.

7. Lighting device in accordance with one of the preceding claims,
**characterized in that**
the lamellas (11) are supported such that they can swivel.

8. Lighting device in accordance with claim 7, **characterized in that** all the lamellas (11) are connected in movement so that they can swivel together.

9. Lighting device in accordance with claim 7,
**characterized in that** the lamellas (11) are in each case connected in movement to lamellas (11) located along a radial plane and/or axially one behind another, such that they can swivel jointly.

10. Lighting in accordance with claim 7,
**characterized in that**
all lamellas (11) can swivel separately.

11. Lighting device in accordance with one of claims 7 to 10,
**characterized in that**
the lamellas (11) are able to swivel through use of traction means, particularly load lines (15), running in a cavity of the base (10).

12. Lighting device in accordance with one of claims 7 to 11,
**characterized in that**
the lighting means can swivel with the lamellas (11) that are associated with them.

13. Lighting in accordance with one of the preceding claims,
**characterized in that**
the reflectors (3) are semi-transparent.

14. Lighting in accordance with one of the preceding claims,
**characterized in that** the base (2, 10) comprises a solid cooling body.

15. Lighting in accordance with one of claims 1 to 13,
**characterized in that**
the base (2, 10) envelopes heat outlets made, in particular, of copper.

16. Lighting device in accordance with one of the preceding claims,
**characterized in that**,
in an extension of the base (2, 10), in the direction from which the light comes, there is a further optical element, particularly a lens (6, 13).

17. Lighting device in accordance with claim 16,
**characterized in that**
the element is associated with a further lighting means.

18. Lighting device in accordance with claim 16,
**characterized in that**
the lighting means are LEDs (4, 12).

## Revendications

1. Dispositif d'éclairage, en particulier phare, pour un véhicule automobile, comprenant un corps de base allongé, sur lequel est fixé un réflecteur, entourant le corps de base, auquel est associé au moins un moyen d'éclairage, lequel réflecteur est réalisé pour déterminer la zone d'éclairage du dispositif d'éclairage,
**caractérisé en ce,**
**que**, au niveau du corps de base (2,10) sont disposés au moins deux réflecteurs (3) auxquels est associé respectivement au moins un moyen d'éclairage, entourant le corps de base (2, 10), fixés au corps de base, espacés les uns des autres et disposés les uns derrière les autres dans la direction axiale, qui servent à déterminer la zone d'éclairage, au moins un réflecteur (3) étant pourvu de plusieurs fentes radiales de sorte qu'il se compose de plusieurs lamelles (11).

2. Dispositif d'éclairage selon la revendication 1,
**caractérisé en ce,**
**que** le corps de base (2, 10) est essentiellement cylindrique.

3. Dispositif d'éclairage selon la revendication 1,
**caractérisé en ce,**
**que** le corps de base (2, 10) est essentiellement conique ou tronconique, le sommet du cône se trouvant dans la direction de sortie de la lumière.

4. Dispositif d'éclairage selon l'une, quelconque des revendications précédentes,
**caractérisé en ce,**
**que** les moyens d'éclairage sont agencés au niveau du corps de base (2, 10).

5. Dispositif d'éclairage selon l'une quelconque des revendications précédentes,
**caractérisé en ce,**
**qu'**un réflecteur (3) situé plus en avant dans la direction de sortie de la lumière présente un élargissement radial inférieur à celui d'un réflecteur (3) situé plus en arrière dans la direction de sortie de la lumière.

6. Dispositif d'éclairage selon l'une quelconque des revendications précédentes,
**caractérisé en ce,**
**que**, dans le cas de la forme de réalisation à fente de deux réflecteurs (3) disposés l'un derrière l'autre, des lamelles (11) disposées les unes derrière les autres sont disposées de manière décalée les unes par rapport aux autres ou de manière alignée.

7. Dispositif d'éclairage selon l'une quelconque des revendications précédentes,
**caractérisé en ce,**
**que** les lamelles (11) sont montées de manière à pouvoir pivoter.

8. Dispositif d'éclairage selon la revendication 7,
**caractérisé en ce que** toutes les lamelles (11) sont couplées cinématiquement, de sorte à pouvoir pivoter ensemble.

9. Dispositif d'éclairage selon la revendication 7,
**caractérisé en ce,**
**que** respectivement les lamelles (11) d'un plan radial et/ou les lamelles (11) disposées axialement les unes derrière les autres sont couplées cinématiquement, de sorte à pouvoir pivoter ensemble.

10. Dispositif d'éclairage selon la revendication 7,
**caractérisé en ce,**
**que** toutes les lamelles (11) peuvent pivoter séparément.

11. Dispositif d'éclairage selon l'une quelconque des revendications 7 à 10,
**caractérisé en ce,**
**que** les lamelles (11) peuvent pivoter par le biais de moyens de traction, en particulier des câbles de traction (15) s'étendant dans une cavité du corps de base (10).

12. Dispositif d'éclairage selon l'une quelconque des revendications 7 à 11,
**caractérisé en ce,**
**que** les moyens d'éclairage peuvent pivoter avec les lamelles (11) qui leur sont associées.

13. Dispositif d'éclairage selon l'une quelconque des revendications précédentes,
**caractérisé en ce,**
**que** les réflecteurs (3) sont semi-transparents.

14. Dispositif d'éclairage selon l'une quelconque des revendications précédentes, **caractérisé en ce que** le corps de base (2, 10) comprend un dissipateur de chaleur massif.

15. Dispositif d'éclairage selon l'une quelconque des revendications 1 à 13,
**caractérisé en ce,**
**que** le corps de base (2, 10) comprend des déflecteurs de chaleur, en particulier en cuivre.

16. Dispositif d'éclairage selon l'une quelconque des revendications précédentes,
**caractérisé en ce,**
**qu'**un autre élément optique, en particulier une lentille (6, 13), est prévu dans le prolongement du corps de base (2, 10) dans la direction de sortie de la lumière.

17. Dispositif d'éclairage selon la revendication 16,
**caractérisé en ce,**
**qu'**un autre moyen d'éclairage est associé à l'élément.

18. Dispositif d'éclairage selon l'une quelconque des revendications précédentes,
**caractérisé en ce**
**que** les moyens d'éclairage sont des DEL (4, 12).
